# EUROPÄISCHE PATENTANMELDUNG

(11) **EP 4 296 040 A1**
(43) Veröffentlichungstag der Anmeldung: **27.12.2023**
(21) Anmeldenummer: 23164909.6
(22) Anmeldetag: 29.03.2023
(51) Int. Cl.: B29C 49/46, B29C 49/12, B29C 49/06, B29C 49/28

(54) **VORRICHTUNG ZUM UMFORMEN VON KUNSTSTOFFVORFORMLINGEN ZU KUNSTSTOFFBEHÄLTNISSE MIT AN RECKEINRICHTUNG ANGEORDNETER DECKELEINRICHTUNG**

(30) Priorität: 05.07.2022 DE 102022116735
(71) Anmelder: Krones AG, 93073 Neutraubling (DE)
(72) Erfinder: Wittmann, Christian, 93073 Neutraubling (DE); Geltinger, Florian, 93073 Neutraubling (DE); Theen, Daniel, 93073 Neutraubling (DE)
(74) Vertreter: Hannke Bittner & Partner mbB Regensburg

(57) **Zusammenfassung**

Vorrichtung (1) zum Umformen von Kunststoffvorformlingen (10) zu Kunststoffbehältnissen (15) mit einer Transporteinrichtung (2), welche die umzuformenden Kunststoffvorformlinge s transportiert, wobei die Transporteinrichtung (2) einen drehbaren Transportträger (22) aufweist, an dem eine Vielzahl von Umformungsstationen (4) angeordnet ist, wobei die Umformungsstationen (4) jeweils Beaufschlagungseinrichtungen (84) aufweisen, um die Kunststoffvorformlinge (10) mit dem fließfähigen Medium zu beaufschlagen, wobei die Umformungsstationen (4) jeweils Reckeinrichtungen (30) zum Dehnen der aufweisen und diese Reckeinrichtungen(30) jeweils wenigstens eine in der Längsrichtung (L) der Kunststoffvorformlinge (10) bewegliche Reckstange aufweisen wobei die Vorrichtung einen Reinraum (8) aufweist, innerhalb dessen die Kunststoffvorformlinge (10) zu den Kunststoffbehältnissen expandiert werden sowie eine Dichtungsvorrichtung (50), um den Reinraum (8) gegenüber einer unsterilen Umgebung abzudichten und diese Dichtungseinrichtung (50) wenigstens einen mit einer Flüssigkeit befüllbaren umlaufenden Kanal (52) aufweist, dadurch gekennzeichnet, dass
der Reinraum (8) mit einer Deckeleinrichtung (22) abgeschlossen ist, und diese Deckeleinrichtung mittels Befestigungseinrichtungen (16) wenigstens an wenigstens einer Reckeinrichtung befestigt ist.

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. In jüngerer Zeit sind auch Vorrichtungen und Verfahren bekannt geworden, bei denen die Umformung der Kunststoffvorformlinge zu den Kunststoffbehältnissen innerhalb eines Reinraumes erfolgt. Auf diese Weise ist es beispielsweise möglich, dass bereits der gesamte Umformungsprozess unter sterilen Bedingungen erfolgt und daher anschließend die gefertigten Kunststoffbehältnisse nicht erneut oder nur mit verringertem Aufwand sterilisiert werden müssen. Aus dem Stand der Technik sind weiterhin sog. Blasformmaschinen bekannt, welche während des Blasvorgangs die Kunststoffvorformlinge auch in ihrer Längsrichtung dehnen. Hierbei handelt es sich insbesondere um sog. Streckblasmaschinen.

Im Stand der Technik werden üblicherweise zur Abdichtung des Reinraums sog. Wasserschlösser bzw. hydraulische Dichtungen eingesetzt. Diese weisen üblicherweise einen umlaufenden und mit einer Flüssigkeit gefüllten Kanal auf, in den ein Schwert bzw. eine umlaufende Wandung eintaucht. Dabei gehört dieses Schwert üblicherweise zu einem drehenden Teil der Anlage und der umlaufende Kanal ist stationär angeordnet.

Im internen Stand der Technik der Anmelderin sind zwei derartige Wasserschlösser vorgesehen. Das obere dieser beiden Wasserschlösser wird im Augenblick von einem massiv ausgeführten Blasrad gehalten. Dieses Blasrad ist damit als abstützendes Teil ausgebildet.

Dieses Blasrad ist sehr schwer und verformt sich bei einer thermischen Belastung insbesondere während der Sterilisation im Ganzen. Dies hat danach Auswirkungen auf die einzelnen Reckeinrichtungen, die auf dem Blasrad montiert sind. Insbesondere können die eingestellten Übergabepositionen unsauber werden, was wiederum zu Ausfällen führen kann.

Der vorliegenden Erfindung liegt daher die Aufgabe zugrunde, derartige Vorrichtungen und Verfahren betriebssicherer zu gestalten. Insbesondere sollen auch die Einflüsse von thermischen Ausdehnungen reduziert werden. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Transporteinrichtung auf, welche die umzuformenden Kunststoffvorformlinge entlang eines vorgegebenen Transportpfads transportiert und/oder welche dazu geeignet und bestimmt ist, die Kunststoffvorformlinge entlang eines vorgegebenen Transportpfads zu transportieren, wobei die Transporteinrichtung einen drehbaren Transportträger aufweist, an dem eine Vielzahl von Umformungsstationen angeordnet ist und wobei diese Umformungsstationen jeweils Blasformeinrichtungen aufweisen, innerhalb derer die Kunststoffvorformlinge durch Beaufschlagung mit einem fließfähigen und insbesondere gasförmigen Medium zu den Kunststoffbehältnissen umformbar sind. Bevorzugt verläuft der Transportpfad kreisförmig.

Weiterhin weisen die Umformungsstationen jeweils Beaufschlagungseinrichtungen auf, um die Kunststoffvorformlinge mit dem fließfähigen Medium zu beaufschlagen, wobei die Umformungsstationen jeweils Reckeinrichtungen zum Dehnen der Kunststoffvorformlinge in deren Längsrichtung aufweisen und diese Reckeinrichtungen jeweils wenigstens eine in der Längsrichtung der Kunststoffvorformlinge bewegliche Reckstange aufweisen, welche in die Kunststoffvorformlinge einführbar ist.

Weiterhin weist die Vorrichtung einen Reinraum auf, innerhalb dessen die Kunststoffvorformlinge zu den Kunststoffbehältnissen expandierbar sind und/oder expandiert werden sowie eine Dichtungsvorrichtung, um den Reinraum gegenüber einer unsterilen Umgebung abzudichten. Weiterhin weist diese Dichtungseinrichtung wenigstens einen und bevorzugt wenigstens zwei mit einer Flüssigkeit befüllbare oder befüllte umlaufende Kanäle auf.

Erfindungsgemäß ist der Reinraum mit einer Deckeleinrichtung abgeschlossen und diese Deckeleinrichtung ist mittels Befestigungseinrichtung wenigstens an wenigstens einer Reckeinheit befestigt. Bei einer anderen erfindungsgemäßen Ausführungsform ist die Deckeleinrichtung als nicht tragende Einrichtung ausgeführt. Daneben wäre es auch denkbar, diese beiden erfindungsgemäßen Ausgestaltungen miteinander zu kombinieren.

Damit wird vorgeschlagen, dass die Deckeleinrichtung wenigstens an einer Reckeinheit befestigt ist. Darüber hinaus ist bevorzugt die Deckeleinrichtung an mehreren Reckeinheiten befestigt. Darüber hinaus ist es auch denkbar, dass die Deckeleinrichtung zusätzlich noch an anderen Anlagenteilen und/oder Baugruppen befestigt ist.

So ist es denkbar, dass die Deckeleinrichtung nicht nur, etwa mittels Bolzen (wie unten genauer beschrieben wird) an der oder den Reckeinheiten befestigt ist, sondern auch an anderen Stellen (z.B. an diversen Säulen, welche auf dem Blasrad bzw. dem Transportträger angeordnet sind).

Die unten genauer beschriebenen Bolzen sind vorteilhaft geeignet um das Gewicht der Deckeleinrichtung aufzunehmen.

Bei einer weiteren erfindungsgemäßen Ausgestaltung ist der Reinraum mit einer Deckeleinrichtung abgeschlossen, und diese Deckeleinrichtung ist mittels Befestigungseinrichtungen an wenigstens einem tragenden Element innerhalb des Reinraums und bevorzugt an mehreren tragenden Elementen innerhalb des Reinraums angeordnet.

Bevorzugt sind diese tragenden Elemente aus einer Gruppe von tragenden Elementen ausgewählt, welche Reckeinheit, Formträgerhalter, eine hintere Isolatorwand, Säulen die auf dem Transportträger angeordnet und dergleichen ausgewählt.

Unter einer Ausführung als nicht tragende Einrichtung wird insbesondere verstanden, dass die Deckeleinrichtung weder dazu geeignet noch dazu bestimmt ist, Bestandteile der Vorrichtung, wie etwa Antriebe, Umformungsstationen und dergleichen zu tragen.

So kann die Deckeleinrichtung beispielsweise in einer Materialstärke und/oder einem Material gefertigt sein, welches keine tragende und/oder stützende Funktion ermöglicht.

Bevorzugt weist die Vorrichtung einen stationären Teil und einen drehbaren Teil auf. Bevorzugt ist der oben erwähnte Transportträger ein Bestandteil des drehbaren Teils der Vorrichtung. Bevorzugt ist auch die erwähnte Deckeleinrichtung ein Bestandteil des drehbaren bzw. drehenden Teils der Vorrichtung.

Bevorzugt ist der wenigstens eine oben erwähnte umlaufende Kanal ein Bestandteil des stationären Teils der Vorrichtung. Bevorzugt weist die Vorrichtung eine umlaufende Wandung auf, welche in ein in dem Kanal befindliches flüssiges Medium, beispielsweise Wasser eintaucht. Diese Wandung ist bevorzugt Bestandteil des drehenden Teils der Vorrichtung.

Bevorzugt ist der oben erwähnte umlaufende Kanal ringförmig ausgebildet. Besonders bevorzugt weist der Reinraum eine torusförmige Gestalt auf. Besonders bevorzugt wird der Reinraum durch diesen genannten ringförmigen Kanal und bevorzugt einen weiteren entsprechend ringförmigen Kanal abgegrenzt. Besonders bevorzugt wird der Reinraum durch wenigstens eine Wandung begrenzt. Besonders bevorzugt sind wenigstens zwei Wandungen vorgesehen, welche den Reinraum begrenzen, wobei eine Wandung gegenüber der anderen Wandung beweglich und insbesondere drehbeweglich ist.

Besonders bevorzugt ist wenigstens eine Antriebseinrichtung und sind bevorzugt eine Vielzahl von Antriebseinrichtungen zum Antreiben der Reckstangen vorgesehen. Dabei ist es möglich, dass diese Antriebseinrichtung außerhalb oder auch innerhalb des Reinraums angeordnet ist.

Besonders bevorzugt kann es sich bei der Antriebseinrichtung um eine Führungskurve handeln, der gegenüber eine Führungsrolle abrollt. Daneben könnten jedoch auch pneumatische Antriebe, elektrische Antriebseinrichtungen oder hydraulische Antriebseinrichtungen Einsatz finden. Besonders bevorzugt handelt es sich bei der Antriebseinrichtung um einen Linearmotor.

Bei einer bevorzugten Ausführungsform weist die Vorrichtung eine Antriebseinrichtung zum Drehen des drehbaren Transportträgers auf, wobei bevorzugt diese Antriebseinrichtung außerhalb des Reinraums angeordnet ist.

Weiterhin weist bevorzugt die Vorrichtung auch wenigstens eine und bevorzugt eine Vielzahl von Antriebseinrichtungen auf, welche die Beaufschlagungseinrichtung auf die Kunststoffvorformlinge zustellen, um diese mit dem fließfähigen Medium zu beaufschlagen. Besonders bevorzugt ist die Blasformeinrichtung wenigstens dreiteilig ausgebildet und weist zwei Seitenteile und ein Bodenteil auf. Weiterhin sind auch Blasformträger vorgesehen, an denen die Seitenteile der Blasformeinrichtung befestigt sind, und welche durch eine Schwenkbewegung ein Öffnen und Schließen der Blasformeinrichtung ermöglichen.

Bei einer bevorzugten Ausführungsform ist die Deckeleinrichtung wenigstens an mehreren Reckeinrichtungen befestigt. Besonders bevorzugt ist die Deckeleinrichtung an allen Reckeinrichtungen befestigt.

Bei einer bevorzugten Ausführungsform ist daher der obere Teil des Drehisolators, d. h. die Deckeleinrichtung bevorzugt über mehrere Befestigungseinrichtungen an den Reckeinrichtungen befestigt. Besonders bevorzugt begrenzt dabei die Deckeleinrichtung nur den Reinraum und ist selbst nicht tragend ausgebildet. Auf diese Weise kann die Deckeleinrichtung aus vergleichsweise leichten oder dünnen Materialien hergestellt werden.

Bei einer weiteren vorteilhaften Ausführungsform ist die Deckeleinrichtung mittels einer Vielzahl von Verbindungselementen und insbesondere Verbindungsbolzen an mehreren Reckeinrichtungen befestigt. Bei dieser Ausgestaltung dienen als Verbindungselemente daher bevorzugt Verbindungsbolzen. Dabei ist es möglich, dass die Deckeleinrichtung mittels eines Verbindungselements und insbesondere Verbindungsbolzens an den jeweiligen Reckeinrichtungen befestigt ist oder auch, dass die Deckeleinrichtung mittels wenigstens zwei Verbindungselementen und insbesondere Verbindungsbolzen an den jeweiligen Reckeinrichtungen befestigt ist.

Besonders bevorzugt sind die Verbindungselemente biegbar (und insbesondere reversibel biegbar) und insbesondere elastisch ausgeführt, insbesondere um eine thermisch bedingte Ausdehnung der Deckeleinrichtung aufzunehmen und/oder abzufangen. Auf diese Weise wird erreicht, dass der mechanische Halt zwischen der Deckeleinrichtung und den Reckeinrichtungen unabhängig von der Ausdehnung gegeben ist.

Auch wird auf diese Weise erreicht, dass auch eine Ausdehnung der Deckeleinrichtung nicht zu einer Verschiebung der Reckeinrichtungen führt und daher die Position der Reckeinrichtungen hierdurch nicht beeinträchtigt wird. Besonders bevorzugt sind die Verbindungselemente aus einem Material gefertigt, welches aus einer Gruppe von Materialien ausgewählt ist, welche Stahl und Edelstahl enthält. Bevorzugt sind die Verbindungselemente aus einem Material gefertigt, welches eine höhere Festigkeit aufweist als eine Wandung und insbesondere eine den Reinraum begrenzende Wandung.

Bevorzugt weisen die Befestigungseinrichtungen (bei denen es sich insbesondere um Bolzen handelt) eine Länge auf, die größer ist als 90mm, bevorzugt größer als 100mm, bevorzugt größer als 110mm, bevorzugt größer als 120mm und besonders bevorzugt größer als 130mm.

Bevorzugt weisen die Befestigungseinrichtungen (bei denen es sich insbesondere um Bolzen handelt) eine Länge auf, die kleiner ist als 200mm, bevorzugt kleiner als 180mm, bevorzugt kleiner als 160mm, bevorzugt kleiner als 150mm und besonders bevorzugt kleiner als 130mm.

Bevorzugt nehmen diese Verbindungselemente und insbesondere Biegebolzen den größten Teil der thermischen Verformung der Deckeleinrichtung auf. Bevorzugt nehmen diese Verbindungselemente wenigstens 70%, bevorzugt wenigstens 80% und bevorzugt wenigstens 90% der Verformung der Deckeleinrichtung auf. Auf diese Weise werden die Reckeinrichtungen weniger belastet und besonders bevorzugt auch thermisch von der Deckeleinrichtung entkoppelt. Auf diese Weise wird sichergestellt, dass die thermische Verformung des Reinraums, bzw. des Isolators keinen Einfluss auf die Übergabepositionen hat.

Besonders bevorzugt sind die Befestigungselemente so ausgeführt, dass sie die statische Gewichtskraft der Deckeleinrichtung aufnehmen können. Insbesondere lassen sie sich wie oben erwähnt verbiegen, wenn sich der Deckel, bzw. die Deckeleinrichtung thermisch (bedingt) ausdehnt.

Bei einer weiteren Ausführungsform ist die Deckeleinrichtung schwimmend gelagert. Insbesondere kann sie sich daher in vorgegebenen Grenzen in einer horizontalen Richtung bewegen. Dies ist unkritisch, da, wie oben erwähnt, die Deckeleinrichtung bevorzugt nicht als tragende Einrichtung ausgeführt ist.

Bevorzugt ist ein Bewegungsspiel der Deckeleinrichtung in einer horizontalen Ebene zugelassen welches größer ist als 1mm, bevorzugt größer als 2mm und bevorzugt größer als 3mm.

Bevorzugt ist ein Bewegungsspiel der Deckeleinrichtung in einer horizontalen Ebene zugelassen welches geringer ist als 5cm, bevorzugt geringer als 3cm und bevorzugt geringer als 1cm.

Bei einer weiteren vorteilhaften Ausführungsform sind die Reckeinrichtung, bzw. die Reckeinrichtungen und die Deckeleinrichtung thermisch voneinander entkoppelt. Dies kann insbesondere dadurch erreicht werden, dass die Verbindungselemente aus einem thermisch nichtleitenden Material bzw. einem thermischen Isolator bestehen.

Besonders bevorzugt weist die Dichtungseinrichtung eine umlaufende Wandung auf, welche in den umlaufenden Kanal ragt, wobei diese Wandung bevorzugt drehbar ausgeführt ist.

Besonders bevorzugt ist auch der oben erwähnte umlaufende Kanal an wenigstens einer und bevorzugt an einer Vielzahl von Reckeinrichtungen befestigt. Auf diese Weise kann die Verbindung zwischen dem umlaufenden Kanal und den Reckeinrichtungen sehr stabil gehalten werden. Besonders bevorzugt sind die Reckeinrichtungen und/oder Bestandteile der Reckeinrichtungen als tragende Elemente ausgebildet.

Bei einer weiteren vorteilhaften Ausführungsform weist die Deckeleinrichtung eine im Wesentlichen kreisförmige oder kreisringförmige Gestalt auf. Unter im Wesentlichen kreisförmig wird dabei verstanden, dass eventuelle Elemente der Deckeleinrichtung, wie Löcher oder Befestigungsmittel oder dergleichen bei der Beurteilung der Kreisförmigkeit der der Kreisringförmigkeit außer Acht gelassen werden.

Bei einer weiteren vorteilhaften Ausführungsform weist die Deckeleinrichtung eine (sich insbesondere in einer vertikalen Richtung und/oder der Längsrichtung der Kunststoffvorformlinge erstreckende) Materialdicke aufweist, die kleiner ist als 50mm. bevorzugt kleiner als 40mm und besonders bevorzugt kleiner als 30mm und besonders bevorzugt kleiner als 20mm.

Bei einer weiteren vorteilhaften Ausführungsform weist die Deckeleinrichtung eine Materialdicke aufweist, die größer ist als 1mm, bevorzugt größer als 2mm und bevorzugt größer als 3mm.

Bei einer bevorzugten Ausführungsform ist die Deckeleinrichtung einteilig ausgebildet, Es wäre aber auch denkbar, dass sich die Deckeleinrichtung aus mehreren Bestandteilen zusammensetzt.

Bei einer weiteren bevorzugten Ausführungsform ist die Deckeleinrichtung aus Aluminium oder einem Kunststoff gefertigt.

Bei einer weiteren bevorzugten Ausführungsform ist die Deckeleinrichtung von den Reckeinrichtungen lösbar. Auf diese Weise lässt sich insbesondere der Reinraum öffnen.

Die vorliegende Erfindung ist weiterhin auf ein Verfahren zum Umformen von Kunststoffvorformlingen zu Kunststoffbehältnissen gerichtet, wobei eine Transporteinrichtung die umzuformenden Kunststoffvorformlinge entlang eines vorgegebenen Transportpfads transportiert und wobei die Transporteinrichtung einen drehbaren Träger aufweist an dem eine Vielzahl von Umformungsstationen angeordnet wird und/oder angeordnet ist, wobei diese Umformungsstationen jeweils Blasformeinrichtungen aufweisen, innerhalb derer die Kunststoffvorformlinge durch Beaufschlagung mit einem fließfähigen Medium zu den Kunststoffbehältnissen umgeformt werden und die Umformungsstationen jeweils Beaufschlagungseinrichtungen aufweisen, welche die Kunststoffvorformlinge mit einem fließfähigen und insbesondere gasförmigen Medium (und insbesondere Sterilluft) beaufschlagen, wobei die Umformungsstationen jeweils Reckeinrichtungen zum Dehnen der Kunststoffvorformlinge in deren Längsrichtung aufweisen bzw. Reckeinrichtungen, welche die Kunststoffvorformlinge in deren Längsrichtungen dehnen und diese Reckeinrichtungen jeweils wenigstens eine in der Längsrichtung der Kunststoffvorformlinge bewegliche und/oder sich bewegende Reckstange aufweisen, welche in die Kunststoffvorformlinge eingeführt wird.

Weiterhin weist die Vorrichtung einen Reinraum auf, innerhalb dessen die Kunststoffvorformlinge zu den Kunststoffbehältnissen expandiert werden sowie eine Dichtungsvorrichtung, welche den Reinraum gegenüber einer unsterilen Umgebung abdichtet. Dabei weist die Dichtungseinrichtung bevorzugt wenigstens einen mit einer Flüssigkeit befüllten umlaufenden Kanal auf.

Erfindungsgemäß wird der Reinraum mit einer Deckeleinrichtung abgeschlossen und diese Deckeleinrichtung wird und/oder ist mittels Befestigungseinrichtungen an wenigstens einer Reckeinheit befestigt oder ist dort befestigbar. Bei einer weiteren erfindungsgemäßen Ausführungsform ist und/oder wird die Deckeleinrichtung als nicht tragende Einrichtung ausgeführt.

Besonders bevorzugt verbinden Verbindungselemente und insbesondere Verbindungsbolzen die Deckeleinrichtung mit den Reckeinrichtungen. Besonders bevorzugt kompensieren diese Verbindungselemente eine evtl. auftretende thermische Ausdehnung der Deckeleinrichtung.

Besonders bevorzugt wird die Deckeleinrichtung als nichttragende Einheit der Vorrichtung ausgeführt.

Besonders bevorzugt wird die Deckeleinrichtung gegenüber wenigstens einer Reckeinheit und bevorzugt mehreren und besonders bevorzugt allen Reckeinrichtungen thermisch isoliert.

Bei einem weiteren bevorzugten Verfahren wird eine Drehbewegung der Deckeleinrichtung an eine Drehbewegung des Transportträgers gekoppelt.

Weitere Vorteile und Ausführungsformen ergeben sich aus den beigefügten Zeichnungen:
Darin zeigen:
- Fig. 1: eine schematische Darstellung einer erfindungsgemäßen Vorrichtung; und
- Fig. 2: eine teilweise Ansicht einer erfindungsgemäßen Vorrichtung.

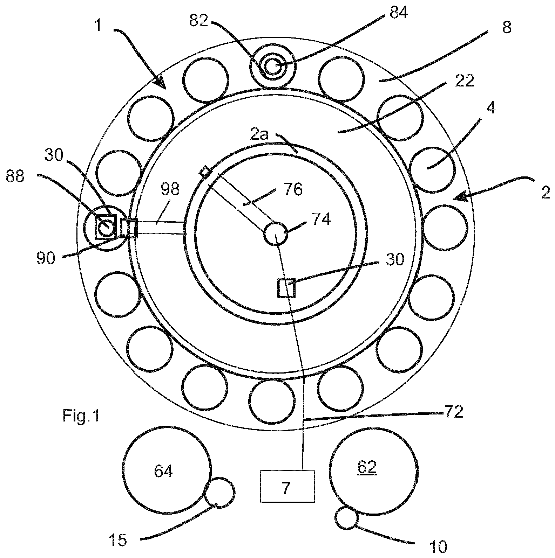

Fig. 1 zeigt eine Vorrichtung 1 zum Umformen von Kunststoffvorformlingen 10 zu Kunststoffbehältnissen 15. Diese Vorrichtung weist einen drehbaren Träger 22 auf, an dem eine Vielzahl von Umformungsstationen 4 angeordnet ist. Diese einzelnen Umformungsstationen weisen jeweils Blasformeinrichtungen 82 auf, die in ihrem Inneren einen Hohlraum zum Expandieren der Kunststoffvorformlinge ausbilden.

Das Bezugszeichen 84 kennzeichnet eine Beaufschlagungseinrichtung, welche zum Expandieren der Kunststoffvorformlinge 10 dient. Hierbei kann es sich beispielsweise um eine Blasdüse handeln, welche an eine Mündung der Kunststoffvorformlinge anlegbar ist, um diese so zu expandieren. Daneben wäre es auch denkbar, dass die Blasdüse an der Blasformeinrichtung abdichtet

Das Bezugszeichen 90 kennzeichnet eine Ventilanordnung wie einen Ventilblock, der bevorzugt eine Vielzahl von Ventilen aufweist, welche die Beaufschlagung der Kunststoffvorformlinge mit unterschiedlichen Druckniveaus steuern.

Bei einem bevorzugten Verfahren werden die Kunststoffvorformlinge zunächst mit einem Vorblasdruck P1 beaufschlagt, anschließend mit mindestens einem Zwischenblasdruck Pi, der höher ist als der Vorblasdruck und schließlich mit einem Fertigblasdruck P2, der höher ist als der Zwischenblasdruck Pi. Nach der Expansion der Kunststoffbehältnisse werden bevorzugt die Drücke bzw. die Druckluft wieder von dem Behältnis in die einzelnen Druckreservoirs zurückgeführt.

Das Bezugszeichen 88 kennzeichnet eine Reckstange, die dazu dient, die Kunststoffvorformlinge in ihrer Längsrichtung zu dehnen. Bevorzugt weisen sämtliche Umformungsstationen derartige Blasformen 82 sowie Reckstangen 88 auf. Diese Reckstange ist bevorzugt Bestandteil einer mit 30 bezeichneten Reckeinrichtung.

Bevorzugt liegt die Anzahl dieser Umformungsstationen 4 zwischen 2 und 100, bevorzugt zwischen 4 und 60, bevorzugt zwischen 6 und 40.

Die Kunststoffvorformlinge 10 werden über eine erste Transporteinrichtung 62 wie insbesondere aber nicht ausschließlich einen Transportstern der Vorrichtung zugeführt. Über eine zweite Transporteinrichtung 64 werden die Kunststoffbehältnisse 15 abtransportiert.

Das Bezugszeichen 7 kennzeichnet eine Druckbereitstellungseinrichtung wie etwa einen Kompressor oder auch einen Druckluftanschluss. Die Druckluft wird über eine Verbindungsleitung 72 zu einem Drehverteiler 74 gefördert und von diesem über eine weitere Leitung 76 an das Reservoir 2a angegeben, bei dem es sich hier um einen Ringkanal handelt. Damit dient bevorzugt dieser Drehverteiler zu dem Zweck, Luft von einem stationären Teil der Vorrichtung in einen sich drehenden Teil der Vorrichtung zu führen.

Neben diesem dargestellten Ringkanal 2a sind bevorzugt noch weitere Ringkanäle vorgesehen, die in der in Fig. 1 gezeigten Darstellung jedoch durch den Ringkanal 2a verdeckt sind, beispielsweise darunterliegen. Das Bezugszeichen 98 kennzeichnet eine Verbindungsleitung, welche die Druckluft an eine Umformungsstation 4 bzw. deren Ventilblock 90 abgibt. Bevorzugt ist jeder der Ringkanäle über entsprechende Verbindungsleitungen mit sämtlichen Umformungsstationen verbunden. Diese Verbindungsleitung ist bevorzugt in dem drehenden Teil der Vorrichtung angeordnet.

Das Bezugszeichen 8 kennzeichnet schematisch einen Reinraum, der hier bevorzugt ringförmig ausgebildet ist und den Transportpfad der Kunststoffvorformlinge 10 umgibt. Bevorzugt ist eine (geometrische) Drehachse bezüglich derer der Transportträger 22 drehbar ist, außerhalb des Reinraums 8 angeordnet. Bevorzugt ist der Reinraum mit einer Dichtungseinrichtung, welche bevorzugt wenigstens zwei Wasserschlösser aufweist, gegenüber der unsterilen Umgebung abgedichtet.

Weiterhin weist die Vorrichtung eine (in Fig. 1 nicht gezeigte) Deckeleinrichtung auf, welche den Reinraum 8 nach oben hin begrenzt. Diese Deckeleinrichtung ist dabei bevorzugt an wenigstens einer der Reckeinrichtungen 30 angeordnet.

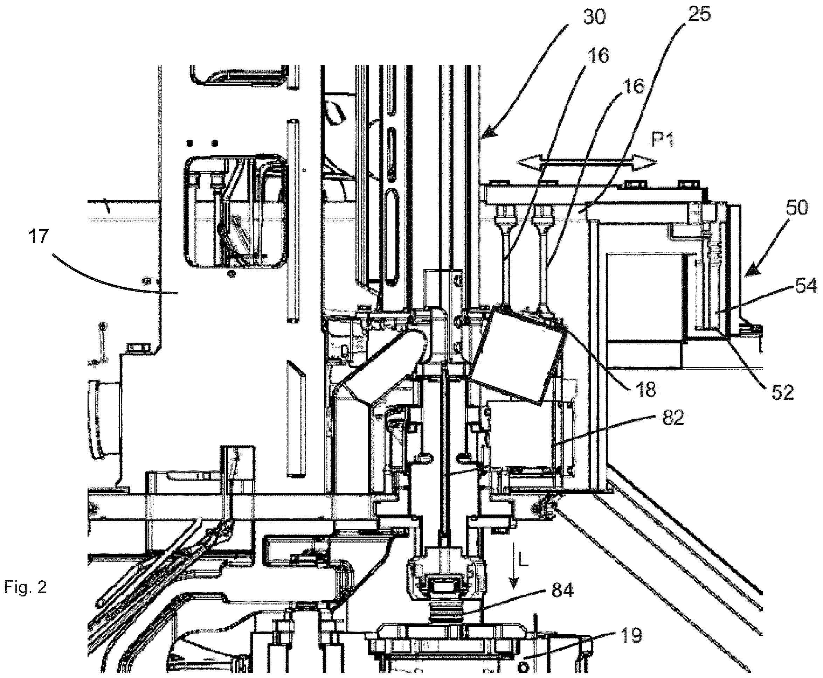

Fig. 2 zeigt eine Seitenansicht einer erfindungsgemäßen Vorrichtung. Dabei ist teilweise eine Umformungsstation dargestellt, welche eine Reckeinrichtung 30 aufweist. Diese Reckeinrichtung weist eine Reckstange 82 auf, welche durch eine Bewegung in der Längsrichtung L (hierbei handelt es sich insbesondere auch um eine Längsrichtung der zu expandierenden Kunststoffvorformlinge) in die Kunststoffvorformlinge einführbar ist.

Das Bezugszeichen 17 kennzeichnet einen Träger der Reckeinrichtung 30. Dieser Träger ist bevorzugt derart dimensioniert, dass er die Reckeinrichtung tragen kann. Das Bezugszeichen 18 kennzeichnet einen Ventilblock bzw. eine Ventilanordnung, welche bevorzugt eine Vielzahl von Ventilen aufweist, mit deren Hilfe die Druckbeaufschlagung der Kunststoffvorformlinge durchgeführt wird.

Das Bezugszeichen 19 kennzeichnet einen Blasformträger, an dem eine (nicht gezeigte) Blasformeinrichtung angeordnet ist.

Das Bezugszeichen 25 kennzeichnet eine Deckeleinrichtung, welche den Reinraum nach oben hin begrenzt. Diese Deckeleinrichtung ist über hier zwei Verbindungselemente 16, insbesondere Verbindungsbolzen 16 an der Reckeinrichtung 30 und auch an weiteren (nicht gezeigten) Reckeinrichtungen angeordnet. Diese Verbindungselemente sind weiterhin an dem Träger 18 der Reckeinrichtung 30 angeordnet.

Das Bezugszeichen P1 kennzeichnet die Richtung in der die Deckeleinrichtung beweglich und/oder schwimmend gelagert ist und in der auch (thermisch bedingte) Ausdehnungen der Deckeleinrichtung aufgefangen werden können.

Bevorzugt sind die Verbindungselemente als Bolzen und insbesondere langgestreckte Bolzen ausgebildet.

Bevorzugt sind diese Verbindungselemente in der Längsrichtung L oder im Wesentlichen in der Längsrichtung L angeordnet (letzteres bedeutet dass eine Erstreckungsrichtung der Verbindungselemente gegenüber der Längsrichtung um weniger als 10°, bevorzugt um weniger als 8°, bevorzugt um weniger als 6° und besonders bevorzugt um weniger als 4° aufweist.

Bevorzugt weisen die Verbindungselemente eine Länge auf, die größer ist als 1cm, bevorzugt größer als 1,5cm, bevorzugt größer als 2cm und bevorzugt größer als 2,5cm.

Bevorzugt weisen die Verbindungselemente eine Länge auf, die kleiner ist als 20cm, und bevorzugt größer als 10cm.

Das Bezugszeichen 50 kennzeichnet eine Dichtungseinrichtung, welche den Reinraum gegenüber der Umgebung abgrenzt. Diese Dichtungseinrichtung weist bevorzugt einen umlaufenden Kanal 52 auf, der insbesondere stationär angeordnet ist. In diesen umlaufenden Kanal bzw. in die darin befindliche Flüssigkeit (nicht gezeigt) taucht bevorzugt eine umlaufende Wandung 54 ein. Diese umlaufende Wandung 54 ist bevorzugt an der Deckeleinrichtung 20 angeordnet.

Bevorzugt weist die Dichtungseinrichtung 50 noch wenigstens einen weiteren umlaufenden Kanal auf, der in Fig. 2 nicht dargestellt ist und der sich bevorzugt unterhalb des gezeigten umlaufenden Kanals 52 befindet. Bevorzugt sind diese Kanäle durch eine umlaufende Wandung miteinander verbunden.

Weiterhin ist bevorzugt die Deckeleinrichtung an weiteren Einrichtungen der Vorrichtung befestigt, was beispielsweise mittels einer Befestigungsplatte 23 erfolgen kann. Dabei kann beispielsweise eine solche Verbindung mit der Säule bestehen, an der der Transportträger d.h. das Blasrad angeordnet ist.

Die Bezugszeichen 2a und 2b kennzeichnen zwei Reservoirs und insbesondere Ringkanäle, die zum Speichern von Druckluft dienen.

Bei einer weiteren bevorzugten Ausführungsform erstrecken sich Bestandteile der Reckeinrichtungen 30 und insbesondere ein Gehäuse der Reckeinrichtung 30 in durch die Deckeleinrichtung 25 hindurch.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Umformen von Kunststoffvorformlingen (10) zu Kunststoffbehältnissen (15) mit einer Transporteinrichtung (2), welche die umzuformenden Kunststoffvorformlinge entlang eines vorgegebenen Transportpfads transportiert, wobei die Transporteinrichtung (2) einen drehbaren Transportträger (22) aufweist, an dem eine Vielzahl von Umformungsstationen (4) angeordnet ist, wobei diese Umformungsstationen (4) jeweils Blasformeinrichtungen (82) aufweisen, innerhalb derer die Kunststoffvorformlinge (10) durch Beaufschlagung mit einem fließfähigen Medium zu den Kunststoffbehältnissen (15) umformbar sind und die Umformungsstationen (4) jeweils Beaufschlagungseinrichtungen (84) aufweisen, um die Kunststoffvorformlinge (10) mit dem fließfähigen Medium zu beaufschlagen, wobei die Umformungsstationen (4) jeweils Reckeinrichtungen (30) zum Dehnen der Kunststoffvorformlinge in deren Längsrichtung (L) aufweisen und diese Reckeinrichtungen (30) jeweils wenigstens eine in der Längsrichtung (L) der Kunststoffvorformlinge (10) bewegliche Reckstange aufweisen, welche in die Kunststoffvorformlinge einführbar ist und wobei die Vorrichtung einen Reinraum (8) aufweist, innerhalb dessen die Kunststoffvorformlinge (10) zu den Kunststoffbehältnissen expandiert werden sowie eine Dichtungsvorrichtung (50), um den Reinraum (8) gegenüber einer unsterilen Umgebung abzudichten,
**dadurch gekennzeichnet, dass**
der Reinraum (8) mit einer Deckeleinrichtung (25) abgeschlossen ist, und diese Deckeleinrichtung (25) mittels Befestigungseinrichtungen (16) wenigstens an wenigstens einer Reckeinrichtung (30) befestigt ist und/oder die Deckeleinrichtung als nicht tragende Einrichtung ausgeführt ist.

2. Vorrichtung (1) zum Umformen von Kunststoffvorformlingen (10) zu Kunststoffbehältnissen (15) mit einer Transporteinrichtung (2), welche die umzuformenden Kunststoffvorformlinge entlang eines vorgegebenen Transportpfads transportiert, wobei die Transporteinrichtung (2) einen drehbaren Transportträger (22) aufweist, an dem eine Vielzahl von Umformungsstationen (4) angeordnet ist, wobei diese Umformungsstationen (4) jeweils Blasformeinrichtungen (82) aufweisen, innerhalb derer die Kunststoffvorformlinge (10) durch Beaufschlagung mit einem fließfähigen Medium zu den Kunststoffbehältnissen (15) umformbar sind und die Umformungsstationen (4) jeweils Beaufschlagungseinrichtungen (84) aufweisen, um die Kunststoffvorformlinge (10) mit dem fließfähigen Medium zu beaufschlagen, wobei die Umformungsstationen (4) jeweils Reckeinrichtungen (30) zum Dehnen der Kunststoffvorformlinge in deren Längsrichtung (L) aufweisen und diese Reckeinrichtungen (30) jeweils wenigstens eine in der Längsrichtung (L) der Kunststoffvorformlinge (10) bewegliche Reckstange aufweisen, welche in die Kunststoffvorformlinge einführbar ist und wobei die Vorrichtung einen Reinraum (8) aufweist, innerhalb dessen die Kunststoffvorformlinge (10) zu den Kunststoffbehältnissen expandiert werden sowie eine Dichtungsvorrichtung (50), um den Reinraum (8) gegenüber einer unsterilen Umgebung abzudichten,
**dadurch gekennzeichnet, dass**
der Reinraum (8) mit einer Deckeleinrichtung (25) abgeschlossen ist, und diese Deckeleinrichtung (25) mittels Befestigungseinrichtungen (16) wenigstens einem tragenden Element innerhalb des Reinraums angeordnet sind.

3. Vorrichtung nach Anspruch 1,
**dadurch gekennzeichnet, dass**
die Deckeleinrichtung als nicht tragende Einrichtung ausgeführt ist.

4. Vorrichtung (1) nach wenigstens einem der vorangegangenen Ansprüche,
**dadurch gekennzeichnet, dass**
die Deckeleinrichtung wenigstens an mehreren Reckeinrichtungen befestigt ist.

5. Vorrichtung (1) nach wenigstens einem der vorangegangenen Ansprüche,
**dadurch gekennzeichnet, dass**
die Deckeleinrichtung mittels einer Vielzahl von Verbindungselementen und insbesondere Verbindungsbolzen (16) an mehreren Reckeinrichtungen (30) befestigt ist.

6. Vorrichtung (1) nach dem vorangegangenen Anspruch,
**dadurch gekennzeichnet, dass**
die Verbindungselemente biegbar und insbesondere reversibel biegbar ausgeführt sind, um eine thermisch bedingte Ausdehnung der Deckeleinrichtung aufzunehmen.

7. Vorrichtung (1) nach wenigstens einem der vorangegangenen Ansprüche,
**dadurch gekennzeichnet, dass**
die Deckeleinrichtung schwimmend gelagert ist.

8. Vorrichtung (1) nach wenigstens einem der vorangegangenen Ansprüche,
**dadurch gekennzeichnet, dass**
die Reckeinrichtung (30) und die Deckeleinrichtung thermische voneinander entkoppelt sind.

9. Vorrichtung (1) nach wenigstens einem der vorangegangenen Ansprüche,
**dadurch gekennzeichnet, dass**
die Dichtungseinrichtung eine umlaufende Wandung (54) aufweist, welche in den umlaufenden Kanal (52) ragt, wobei diese Wandung bevorzugt drehbar ausgebildet ist.

10. Vorrichtung (1) nach wenigstens einem der vorangegangenen Ansprüche,
**dadurch gekennzeichnet, dass**
der umlaufende Kanal an wenigstens einer und bevorzugt an einer Vielzahl von Reckeinrichtungen befestigt ist.

11. Vorrichtung (1) nach wenigstens einem der vorangegangenen Ansprüche,
**dadurch gekennzeichnet, dass**
die Deckeleinrichtung eine im Wesentlichen kreisförmige oder kreisringförmige Gestalt aufweist und/oder die Deckeleinrichtung eine Materialdicke aufweist, die kleiner ist als 50mm, bevorzugt kleiner als 40mm und besonders bevorzugt kleiner als 30mm und besonders bevorzugt kleiner als 20mm ist und/oder die Deckeleinrichtung eine Materialdicke aufweist, die größer ist als 1 mm, bevorzugt größer als 2mm und bevorzugt größer als 3mm ist.

12. Verfahren zum Umformen von Kunststoffvorformlingen (10) zu Kunststoffbehältnissen (15) wobei eine Transporteinrichtung (2), die umzuformenden Kunststoffvorformlinge entlang eines vorgegebenen Transportpfads transportiert, wobei die Transporteinrichtung (2) einen drehbaren Transportträger (22) aufweist, an dem eine Vielzahl von Umformungsstationen (4) angeordnet ist, wobei diese Umformungsstationen (4) jeweils Blasformeinrichtungen aufweisen, innerhalb derer die Kunststoffvorformlinge (10) durch Beaufschlagung mit einem fließfähigen Medium zu den Kunststoffbehältnissen (15) umgeformt werden und die Umformungsstationen (4) jeweils Beaufschlagungseinrichtungen (40) aufweisen, welche die Kunststoffvorformlinge (10) mit dem fließfähigen Medium beaufschlagen, wobei die Umformungsstationen (4) jeweils Reckeinrichtungen (30) zum Dehnen der Kunststoffvorformlinge in deren Längsrichtung (L) aufweisen und diese Reckeinrichtungen (30) jeweils wenigstens eine in der Längsrichtung (L) der Kunststoffvorformlinge (10) bewegliche Reckstange aufweisen, welche in die Kunststoffvorformlinge eingeführt wird und wobei die Vorrichtung einen Reinraum (8) aufweist, innerhalb dessen die Kunststoffvorformlinge (10) zu den Kunststoffbehältnissen expandiert werden sowie eine Dichtungsvorrichtung (50), welche den Reinraum (8) gegenüber einer unsterilen Umgebung abdichtet und diese Dichtungseinrichtung (50) wenigstens einen mit einer Flüssigkeit befüllten umlaufenden Kanal (52) aufweist,
**dadurch gekennzeichnet, dass**
der Reinraum (8) mit einer Deckeleinrichtung (25) abgeschlossen wird, und diese Deckeleinrichtung mittels Befestigungseinrichtungen (16) wenigstens an wenigstens einer Reckeinrichtung (30) befestigt ist und/oder die Deckeleinrichtung als nicht tragende Einrichtung ausgeführt ist.

13. Verfahren nach Anspruch 10,
**dadurch gekennzeichnet, dass**
die Deckeleinrichtung (25) gegenüber wenigstens einer Reckeinrichtung (30) und bevorzugt mehreren Reckeinrichtungen thermisch isoliert wird.
